Europäisches Patentamt

(19) European Patent Office

Office européen des brevets

(11) Publication number: **0 096 812**
**A2**

(12) # EUROPEAN PATENT APPLICATION

(21) Application number: **83105499.4**

(22) Date of filing: **03.06.83**

(51) Int. Cl.³: **B 21 K 23/02,** B 21 L 9/02
// B62D55/20

(30) Priority: **03.06.82 IT 8361982**

(43) Date of publication of application: **28.12.83**
**Bulletin 83/52**

(84) Designated Contracting States: **DE FR GB IT**

(71) Applicant: **CATERPILLAR TRACTOR CO., 100 Northeast Adams Street, Peoria Illinois 61629 (US)**

(72) Inventor: **Sandroni, Gianni, Via Sandroni 46, I-21040 Sumirago (Varese) (IT)**

(74) Representative: **Sassi, Romano, Viale Belforte 89, I-21100 Varese (IT)**

(54) **Method and apparatus for forging track links.**

(57) The invention discloses a process of forging a track link (1) for a track-type vehicle undercarriage. The forging process produces links (1) that conform to very restrictive tolerances without the mecessity of additional machining or finishing. The process includes a classification of "n" link surfaces (A,B; C,D,E; F,F'; G,H,I,L,M,N; O,P,P',Q; R,S) to be forged and involving the whole workpiece in Nn tolerance fields (AB, CDE, FF', GHILMN, OPP'Q, RS). Within each of these N tolerance fields, upon shaping, trimming and double coining, each of "n" surfaces is maintained with an exceeding or deficient quantity of material such as to provide, within tolerance limits, material transfers, particularly small, between one surface and the adjacent one, wherein the active subject of transfer is a surface having a reduced tolerance field to and from a surface standing a larger tolerance.

The invention includes also an apparatus for forging a track link (1) to a desired finished dimension. The apparatus includes a coining die (80, 81) providing coining on at least two planes at right angles whereby coining of surfaces at right angles with die closing and opening direction is provided by transversally-moveable members (86a, 86b) automatically driven by inclined planes (86"a, 86"b) which combine horizontal and vertical movements.

1

# METHOD AND APPARATUS FOR FORGING TRACK LINKS

This invention relates to a process and apparatus for forging track links which conform to very restrictive tolerances without the necessity of additional machining or finishing. The invention includes also the track links obtained with such process and means.

At present status of the art, track links are made in compliance with a method disclosed by French Patent Application No.8114496 in the name of Caterpillar France, filed on July 24, 1981 including heating a metal billet - in an induction electric furnace - with a mass exactly corresponding with the mass of the final link plus the conventional flush, rough-shaping the heated billet, shaping the rough shaped blank to provide a shape close to the finished one, coining the shaped blank in registered conditions, trimming it with a special extruding the coined workpiece, coining in a temperature controlled die such trimmed piece providing it with dimensions corresponding to conventional milling operation, stabilizing the temperature of the coined workpiece in a stabilizing furnace and adjusted to a suitable value for heat treatment and cooling the same to a suitable quench temperature.

Process and means disclosed by French Patent Application No. 8114496 were realized and the links obtained, from the point of view of tolerance limits, were optimal i.e. corresponding to that obtainable with milling and broaching. Whereas, in a considerable percentage of workpieces obtained such optimalization was obtained despite to other surfaces. In fact the final coining step took place standing

2

the upright workpiece on a minor or bottom surface and in any case in unsteady upright condition as this operation depends from shape and condition of one of the very surfaces to be adjusted. Thus resulting in a leant position of the standing link, right link, during working and consequently in a wrong attitude thereof. In fact the dimension is adjusted, whereas perpendicularity is lacking. Since even angular tolerances are exceeded the inherent workpieces are to be discarded. Moreover the vertical coining die temperature is to be maintained and the die is to be placed in a suitable station and the workpieces are to be transferred, loaded and taken off therefrom. Of course, these handlings are time consuming and the workpiece during this time cools resulting in serious drawbacks.

The present invention is directed to overcoming and on more of the problems set forth above in addition to offering several new advantages. The inventor with ingenious perception considering that coining could be comprise a single step and affect all the critical surfaces of workpiece, even if standing at right angles each other, has made an ideal discrimination between shapes and surfaces providing a map thereof and selecting "n" surfaces and classifying them in "N""n" tolerance fields. Taking advantage from this selection the inventor has looked at a procession of subsequent approximations affecting at least shaping, trimming and coining steps, to be provided with material transfer from at least one surface, included in one field, to at least one surface comprised in another field in each of such three steps. That is to say that during coining or minting the affected surfaces: substantially all those standing restricted tolerances, are kept at the highest tolerance limit during shaping and trimming, so that, during coining a reducing effect is provided with material transfer from "n" surfaces or fields "N" which stand restricted tolerances to surfaces "n" or field "N" which stands greater tolerances. Ideally, the inventor has conceived these fields with four attribute functions which may be named: "father", "mother", "son" and "daughter". More particularly a "mother" surface, comprised in an homonymous field, is one that stands a greater tolerance and which, substantially within tolerance limits, is kept with a material deficiency. Field of "father" surfaces is one wherein surfaces comprised in it stand a wider tolerance limit, but with exceeding material. Finally fields "sons", comprising surfaces standing very restricted tolerances may have exceeding material ("son") or deficient material ("daughter"). These functions may also change from one working step to another in a process which is substantially self-adjustable. As regard as coining step the "son" and "daughter" surfaces are those affected by same coining. The arrangement is as follow. A "son" surface will merge its material aboundance into "mother" surfaces, while a "daughter" surface will receive material from a "father" surface. In case of balance between "son" surfaces and "daughter" surfaces a compensation between "father" surfaces and "mother" surfaces will occur.

In accordance with another aspect of the present invention, an

4

apparatus for forging a track-type undercarriage link to a desired finished dimension includes in general a coining die whose cavity affects any "son" and "daughter" surface. As the same are placed on non-parallel planes, the acting walls of die cavity are moveable each in a direction at square angles resulting in sincronous and calibrated movements. In such die the movement of non-parallel surfaces wall is provided each by a moveable member comprising the same surface and movement of such members is provided by inclined planes which transform the movement of press ram in one direction into a non parallel movement of such members.

A better understanding of the links for track chain forging method and means according to the present invention will be understood upon reference to the following detailed description when read in conjunction with the accompanying drawings, wherein like reference characters refer to like parts throughout several views and in which:

Figure 1 is a perspective view of a links for track chain flat dawn.

Figure 2 is a links for track chain substantially as shown at figure 1 but the link is shown upside down.

Figure 3 is a sketch perspective view of the first process forging step comprising of a billet lenght cutting.

Figure 4 is a perspective sketch showing an induction furnace wherein the billet lenght as shown in Fig. 3 is heating.

Figure 5 is a sketch perspective view of the third process step wherein on the left, is shown the workpiece resulting from this rough shaping step.

Figure 6 is a sketch perspective view of moulding step, i.e. of the step following of that shown at figure 5. Even here, on the left side is shown the result of such working step.

Figure 7 is a sketch perspective view, of trimming step coming next to the figure 6 step. Even here, on the left is shown the result of this step as demifinished piecework and flush.

Figure 8 is a sketch perspective view of coining means.

Figure 9 is a sketch symbolic perspective view of reheating step of workpiece in an induction furnace .

Figure 10 is a partial symbolic perspective view of thermal treatment cooling step.

Figure 11 is a perspective view which substantially repeats figure 8 but in an enlarged scale and in a more constructive fashion and partially brocken.

Figures 12, 13 and 14 are symbolic graphs, representing the material flow within tolerance: respectively in shaping, trimming and coining.

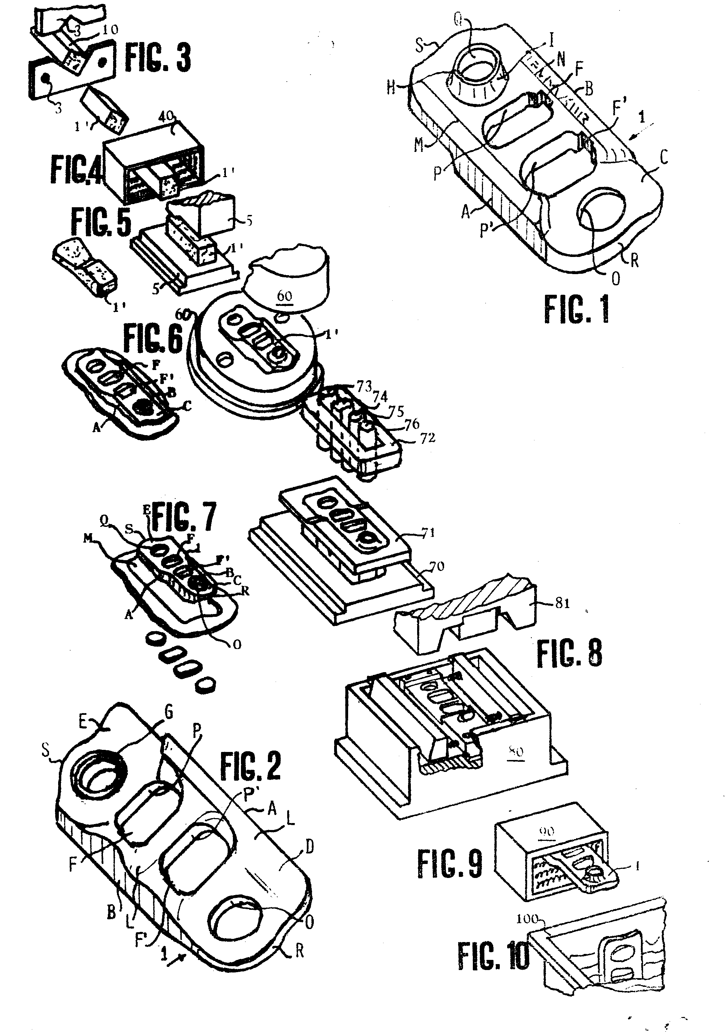

With reference to figures 1 and 2 of the drawings, of a known link 1 of track chain, to the effect of the present invention a map of surfaces is made, classifying the same in accordance of their tolerances. More particularly, surfaces A, B; are classified together, as they are subjected to tolerances, e.g. + or - 0,25 mm. Surfaces C, D, E; are classified together, as they are subjected to tolerances, i.e., +or- 0.5mm. Surfaces F, F'; are subjected to a tolerance for example of +or- 0,4mm and comprise an independent field.

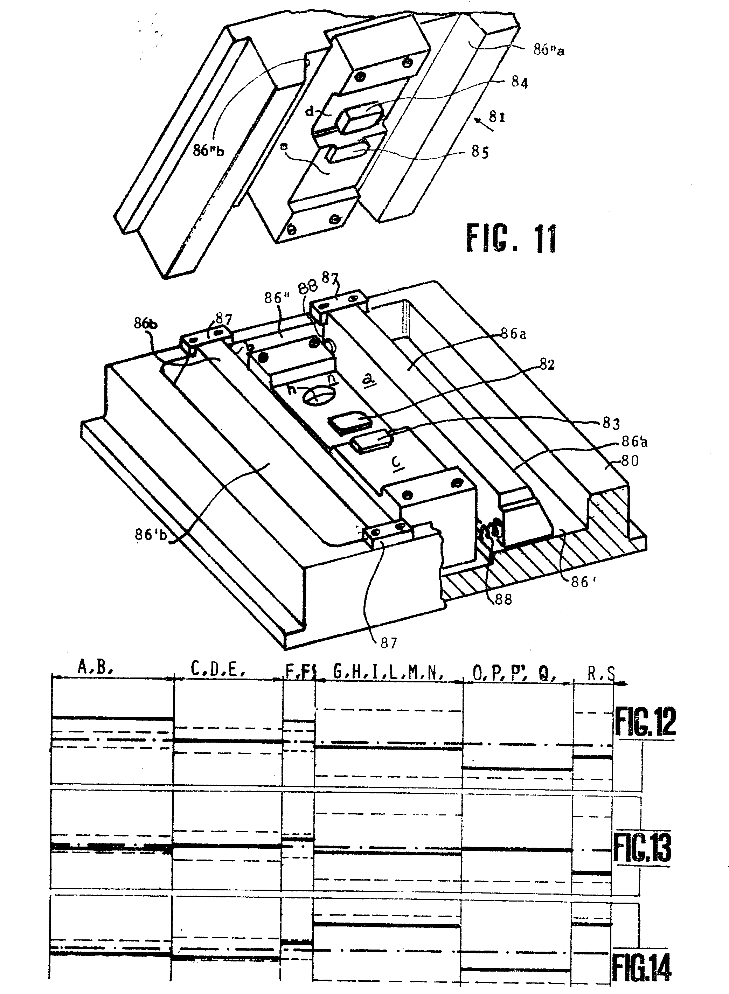

Whereas surfaces G, H, I, L, M, N; and R, S; are all subjected for example, to a tolerance of + or - 1,5 mm. but they are as well divided into two fields:G, H, I, L, M, N; e R, S; while surfaces O, P, P', Q; are subjected for example to tolerances comprised within the rated value and 1,5 mm. The aforesaid fields are, in fact, those shown in abscissa in figures 12, 13 and 14. The process according to the present invention, at least in the first steps thereof, i.e., those represented in figures from 3 to 5 corresponds substantially to the subject matter of application No.8114496 and more particularly comprises shearing from a barstock 10, with a single shear, a billet 1' whose mass corresponds with the mass to the final workpiece plus usual flush. The billet 1' is heated in an electric induction furnace 40. Once heated the billet 1' is submitted to a rough-shaping operation by pressing the billet 1' as shown in Fig. 5. Thereafter, the workpiece 1' is shaped by dies 60 providing workpiece 1' including on surfaces A, B; an allowance exceeding the tolerance field of an entity substantially corresponding to that of the same field, keeping surfaces C, D, E; at rated value, the surfaces F, F'; a little under the upper maximum limit, the surfaces G, H, I, L, M, N; a little bit under rated value, surfaces O, P, P', and Q; almost at at the lowest limit of he tolera  field and surfaces R, S; substantially in the middle of negative tolerance field.

It will be appreciated that the indicate sizes and the tolerance fields are referred to a link kind of about 400 x 200 x 100 mm. and that such sizes and value are the same of that comprised in dies, provided that a value and a size can change in a single direction: growing in case of a die depression and decreasing in case of a convexity of the die; as it is assumed that the die surfaces can only be worn out and it is impossible that a molded workpiece of dimensions inferior to the die size results and this is particularly true for dimensions parallel to the operative axes of the die. Of course a material deficiency is possible which, in any case, should have a beginning in a previous die or material deficiency, which in turn, are due to a vitiate origin.

Upon trimming step (fig.7) whereby surfaces A,B; F,F'; R,S; of link 1 are submitted by dies 70,71,72,73,74,75,76, to a shearing, extrusion or broaching step, better are adjusted by such working and this provides a small reduction of surfaces O,P,P',Q; while surfaces C,D,E; and G,H,I,L,M,N; are not involved by this working step. More particularly, from surfaces A,B; flushes and a reduced exceeding material quantity are removed so as to attain the upper tolerance limit. Surfaces F,F' are substantially adjusted in the same fashion, while the inner surfaces O,P,P' and Q; of corresponding opening undertake a size reduction about to rated value (fig. 13). Upon coining step, (fig. 8) which is also the final very forging step, a finished workpiece of figures 1 and 2 (shown in

8

an enlarged scale relative to figure 8) is provided whereby with an upper and bottom die halves 80,81 a plastic shaping with material transfer from surfaces A,B; C,D,E; to surfaces G,H,I,L,M,N; O,P,Q; R,S, is provided. More particularly (fig.14) surfaces A,B; are adjusted to the lower tolerance limit. Surfaces C,D,E; are adjusted to the lower tolerance limit too; however as in this case the tolerance field is wider an extra amount is left with regard to this lower tolerance limit. Surfaces F,F'; are not involved by coining step and are maintained to the tolerance degree reached upon trimming step (figure 13) with broaching. Surfaces G, H, I, L, M, N; are loaded with part of material flown from surfaces A, B; C, D, E; and reach the upper limit of tolerance field. Even surfaces O,P,P',Q; are loaded with part of material flown from surfaces A,B; C,D,E; however as in this case, such surfaces consist of openings, the material loading adjusts their attitude to the lower tolerance field limit. Even surfaces R,S; are loaded with part of material flown from surfaces A,B; C,D,E; and attain the upper tolerance field limit substantially at the same charge degree of surfaces G,H,I,L,M,N; (fig. 14).

Coining step shown at fig. 8 and resumed by the graph of fig. 14 can be better understood when referring to fig. 11 wherein die 80, 81 is shown in an enlarged scale relative to figure 8, with the die half 81 in open position so as to show its bottom; This die includes directly only part of surfaces comprising the link and more particularly the vertical surfaces A and B and substantially

9

horizontal surfaces C,D,E,N,H. For a better understanding of relationship between each die surface and link surface the same reference were used for the former but in a lower case. Coining of horizontal and parallel surfaces of die halves 80 and 81 is conventional and those sections not directly affected by coining and consequently affected by coining only indirectly are provided with depressions and even their convexity i.e. 82,83,84,85, are useful for the purpose to position the link to be coined in the due attitude. Vertical surfaces A and B match the inner surfaces of members 86a and 86b which are trapezoidal in cross-section extending along the whole lenght of die and at least along the link lenght and registered at the ends between bottom guides 86', end guides 86" and upper guides 87. Members 86a and 86b are urged outwardly by at least two pairs of springs 88, while may be strongly urged inwardly by engaging its beveled sides 86'a) and 86'b); this occur automatically lowering the upper die half 81 on the die half 80 as a result of combined action of inclined planes 86"a) and 86"b). Operation of this die is easy to understand. When the die halves are in open position (figures 8 and 11) members 86a and 86b are spaced apart and a link 1 resulting from the trimming step of figure 7 is fed therebetween by centering it through matching of its openings O,P,P',Q; with corresponding convexities 82,83,84 and 85. At this stage the die half 81 is lowered and with its walls d,e; coins the corresponding surfaces D,E; as well as, of course by reaction, the bottom surfaces C,N,H. At the same time, surfaces 86"a) and 86"b)

10

engage the corresponding surfaces 86'a) and 86'b) of member approaching them to a sized extent by coining surfaces A and B. The links resulting from this working (figures 1 and 2) are finished and their temperature is checked in an electric stabilizing furnace 90 (figure 9) cooling in a tank 100 is provided as shown in figure 10.

-1-

C L A I M S:

1. A process of forging a track link for a track-type vehicle undercarriage producing links (1) that conform to very restrictive tolerances without the necessity of additional machining or finishing, comprising the provision of a metal billet (1') with a mass exactly corresponding with the mass of the final link (1) plus the conventional flush, heating it in an electric furnace (40), rough-shaping the heated billet (1') shaping the rough shaped workpiece (1') to provide a shape with sizes exceding the rated finished ones, coining horizontally the shaped blank (1) to improve its shape and dimensions, trimming it with a special extruding the coined workpiece (1) in registered conditions, coining in a temperature controlled die such trimmed piece providing it with dimensions corresponding to conventional milling operation, stabilizing the temperature of the coined workpiece in a stabilizing furnace (90) and adjusted to a suitable value for heat treatment and cooling the same to a suitable quench temperature, characterized in that coining in at least two planes (A,C) at straight angles is provided contemporarily in a single step with mutual calibrated balancing of material masses and of surfaces, such balancing being provided within the tolerance fields.

2. Process, as claimed in claim 1, characterized in that the operability of adjustments is at least provided in at least one of shaping and trimming steps.

3. Process, as claimed in claims 1 and 2, characterized in that, "n" surfaces (A,B; C,D,E; F,F'; G,H,I,L,M,N; O,P,P',Q; R,S;) are classified in "Nn" homogeneous fields (AB, CDE, FF', GHILMN, OPP'Q, RS,)as regards as to tolerances that they stand.

4. Process, as claimed in one or more in preceding claims, characterized in that the volumetric field of operability of the system is determined by multiplying the area of surfaces times the "thicknesses" of tolerance fields and that such thickness is distributed at any time for any step on "n" surfaces in complementary fashion such to leave on directly engaged surfaces exceeding material which can merge on not directly engaged surfaces.

5. Forging means for producing track-links and suitable to realize the process as claimed in one or more of claims from 1 to 4, characterized in that they comprise shaping, trimming with extrusion or broaching and coining dies (60; 70,71; 80,81;) whose active surfaces provide volumes and rated sizes comprised within machine tool finishing tolerance fields.

6. Means, as claimed in claim 5, characterized in that focoining on at least two sides (A, C) substantially at right angles a die (80, 81) is used which in addition to coining surfaces which are disposed transversely to the direction of opening and closing of die halves (80, 81), comprise for coining at least a non parallel surface at least a transversally moveable member (86a, 86b) in a direction at right angles in respect to one or more surfaces to be coined.

7. Means, as claimed in claim 6, characterized in that the transversely moveable member (86a, 86b) is moved directly or indirectly in answer to closing and opening movements of coining die halves (80, 81).

8. Means, as claimed in claim 7, characterized in that moving of one or more moveable member (86a, 86b) is provided by engagement of at least one follower (86"a, 86"b) with at least one inclined plane (86'a, 86'b).

9. Means, as claimed in claim 8, characterized in that moving of one or more transversally moveable members (86a, 86b) are provided by cooperation of at least two inclined planes (86'a-86"a, 86'b-86"b).

10. A track link obtained by process as claimed in one or more of claims from 1 to 4 and means as claimed in one or more of claims from 7 to 9, including at least two of its surfaces comprised within machine tool tolerance fields, having a dimension up to about 400 x 200 x 100 mm., characterized in that at least two (A,B) of its surfaces have a precision degree included in tolerance field of +or- 0.25mm., at least one (C, D, E) of its surfaces having a precision degree included in a tolerance field of + or - 0.5mm., at least one (F, F') of its surfaces has a precision degree included in a tolerance field of +or- 0.4mm., at least one (O, P, P', Q) of its surfaces has a precision degree included in a tolerance field of 0-1,5mm., at least one (G,H,I,L,M,N; R,S;) of its surfaces has a precision degree included in a tolerance field of +or-1.5mm., and

-4-

particularly two (A,B) of its surfaces have a precision degree included within a tolerance field of +or- 0.25mm., three (C,D,E) of its surfaces have a precision degree included within a tolerance field of +or- 0.5mm., two (F, F') of its surfaces have a precision degree included within a tolerance field of +or- 0,4mm., four (O, P, P', Q) of its surfaces have a precision degree included within a tolerance field of 0-1.5mm., eight (G,H,I,L,M,N; R,S;) of its surfaces have a precision degree included within a tolerance field of +or- 1,5mm.

0096812

FIG. 3

FIG. 4

FIG. 5

FIG. 6

FIG. 1

FIG. 7

FIG. 8

FIG. 2

FIG. 9

FIG. 10

FIG. 11

| A,B, | C,D,E, | F,F; | G,H,I,L,M,N, | O,P,P', Q, | R,S |
|---|---|---|---|---|---|

**FIG.12**

**FIG.13**

**FIG.14**